# EUROPÄISCHE PATENTSCHRIFT

(11) **EP 0 374 644 B1**
(45) Veröffentlichungstag und Bekanntmachung des Hinweises auf die Patenterteilung: **01.09.1993**
(21) Anmeldenummer: 89122741.5
(22) Anmeldetag: 09.12.1989
(51) Int. Cl.: F16K 15/03, F16K 15/18, F16K 1/20

(54) **Schnellschlussklappensystem**
Quick-acting valve system
Clapet à fermeture rapide

(30) Priorität: 23.12.1988 CH 4778/88
(43) Veröffentlichungstag der Anmeldung: 27.06.1990
(73) Patentinhaber: ASEA BROWN BOVERI AG, 5400 Baden (CH)
(72) Erfinder: Lageder, Heinrich, CH-5303 Würenlingen (CH); Ramisch, Jan, CH-5442 Fislisbach (CH); Skala, Karel, Dr., CH-5200 Windisch (CH)

(56) Entgegenhaltungen:
- EP-A- 0 143 910
- DE-A- 1 947 865
- DE-B- 1 201 146
- FR-A- 2 618 517
- GB-A- 972 870

## Beschreibung

Eine Schnellschluss-Armatur zusammen mit einem Abfangventil werden in Dampfturbinen zwischen dem jeweiligen Zwischenüberhitzer und der Mitteldruckturbine plaziert. In Abhängigkeit der Dampfdaten und der Anbauart kann die Schnellschluss-Armatur ein Ventil oder eine Klappe, vorzugsweise eine Pendelklappe sein. Das Öffnen dieser Schnellschluss-Armatur erfolgt hydraulisch, das Schliessen wird über eine Feder eingeleitet. Eine Pendelklappe besitzt gegenüber einem Ventil den Vorteil, dass sie den Dampf nicht umlenken muss, und deshalb naturgemäss niedrige Strömungsverluste verursacht. Ferner ermöglicht eine Pendelklappe eine vorteilhafte Anordnung an der Mitteldruckturbine. Andererseits ist festzustellen, dass eine Pendelklappe eben dieser Strömung stärker ausgesetzt ist als ein Ventil, demnach mechanisch stärker belastet wird, d.h. von der Belastung her gesehen wird die Pendelklappestruktur hoch beansprucht. Betrachtet man die Strömungsvorgänge bei einer Pendelklappe, so ist festzustellen, dass während des Schliessvorganges der Dampfdruck abströmungsseitig der Klappe sinkt und dadurch die Druckdifferenz am Teller der Klappe steigt. Die ganze Pendelklappe wird durch die in Strömungsrichtung wachsende Kraft beschleunigt, dergestalt, dass sich eine hohe und für die Konstruktion der Pendelklappe gefährliche Aufprallgeschwindigkeit des Klappentellers auf den Sitzring im Klappengehäuse einstellt. Zwar könnte man den Schluss ziehen die Konstruktion zu verstärken, jedoch würde mit vergrösserter Masse auch die kinetische Energie steigen. Die Aufprallgeschwindigkeit könnte mittels einer hydraulischen Bremse vermindert werden; jedoch verursacht jede Verzögerung Bremskräfte (Masse mal Verzögerung), welche den ganzen Mechanismus der Pendelklappe stark belasten würde. Es ist auch zu berücksichtigen, dass eine auf eine niedrige Schliessgeschwindigkeit ausgelegte hydraulische Bremse, selbst wenn der Mechanismus der Klappe die durch die Bremskraft verursachte Belastung standhält, den für eine solche Klappe grossen Nachteil aufwiese, dass die Schliessgeschwindigkeit aufgabengemäss zu niedrig wäre, dementsprechend die Schliesszeit zu lange, abgesehen davon, dass bei einer solchen Konstellation der Dampfdruck nach der Klappe noch tiefer sinken würde, was den Druckunterschied und dadurch die Kraft an der Klappe selbst noch höher steigen liesse.

Es kommt hinzu, dass je kleiner die durchströmten Räume zwischen der Schnellschlussklappe und dem Eintritt in die Beschaufelung sind, desto schneller der Druck nach dem Klappenteller wegen sinkender Speicherwirkung fallen muss, was sich wiederum negativ auf die Aufprallgeschwindigkeit der Klappe gegen den Sitzring auswirken muss. Wollte man hier Abhilfe schaffen, müsste man jeweils lange Leitungen nach der Klappe vorsehen, welche allein grosse Speichervolumina bereitstellen können. Es gehört jedoch zur Aufgabenstellung, die Armaturen unmittelbar vor der Turbine zu plazieren:
- um das Speichervolumen zu minimieren, um die Turbine nicht durch Überdrehzahl zu gefährden;
- wegen günstigerer Platzverhältnisse.

Aus der Patentschrift GB 972,870 ist ein gattungsgemäßes Schnellschlussklappensystem bekannt, welches bei unter Druck stehenden Flüssigkeiten angewendet wird, um eine Rückströmung zu verhindern. Es besteht aus einem Servosystem und einem Klappentellersystem, welche voneinander unabhängig sind und über eine Klauenkupplung miteinander gekoppelt sind. Der Klappenteller ist freischwingend angeordnet. Der Antrieb dient nur als Schliesshilfe. Die Dämpfung erfolgt zwischen Hebel und Klappenwelle. Das setzt ein Übergreifen auf eine zweite Ebene voraus, so daß Verkantungen möglich sind. Es können sich dadurch auch Verzerrungen bei der Wegübertragung ergeben. Die Anwendung dieses Schnellschlussklappensystems in Dampfturbinen zum Abschliessen der Vorwärtsströmung von Gasen, d. h. den Dampfstrom zu sperren, wenn das Regelventil bei einem Lastabwurf versagt, ist nicht möglich.

Der Erfindung, wie sie in den Ansprüchen gekennzeichnet ist, liegt die Aufgabe zugrunde, bei einer Schnellschlussklappe der eingangs genannten Art bei maximierter Schliessgeschwindigkeit des Klappentellers die beim Aufprall desselben gegen den Klappengehäusensitz auftretenden Kräfte zu minimieren.

Dies wird erreicht, indem eine hydraulische Bremse vorgesehen wird, die so profiliert ist, dass die Geschwindigkeit des Klappentellers nach Erreichen der maximal zulässigen Aufprallgeschwindigkeit konstant bis zum Aufschlag gehalten wird. Dies hat den Vorteil, dass zusätzliche Bremskräfte, also das Produkt aus Masse mal Verzögerung, welche den Übertragungsmechanismus der Schnellschlussklappe zu belasten vermögen, nicht auftreten. Ferner wird, um die beim Aufschlag auftretenden Kräfte auf den Teller und Hebel der Schnellschlussklappe zu reduzieren, ein Freilauf zwischen den bewegten Teile vorgesehen, der die Aufprallenergie aufteilt, dergestalt, dass damit, entsprechend der vorgenommenen Trennung der Massen, die Beanspruchung auf zwei Aufprallschläge verteilt wird, d.h., nachdem der Klappenteller auf den Sitzring aufgeschlagen hat, drehen sich alle übrigen Massen ab Kupplung servosystemseitig um einen bestimmten in der Kupplung vorgesehenen Freilauf weiter, womit deren kinetische Energie erst mit dem zweiten Aufprall abgebremst wird. Dies hat den grossen Vorteil, dass bei vorgegebener Konstruktion der Schnellschlussklappe die Aufprallgeschwindigkeit in Abhängigkeit der vorgesehenen Aufteilung der Massen maximiert werden kann, ohne damit den Übertragungs-Mechanismus weitgehend zu beanspruchen. Wenn sowohl die Bremskräfte als auch die Aufprallkräfte mithin reduziert werden können, wird es möglich, die zulässigen Betriebsdaten für diese Schnellschlussklappe zu erhöhen.

Vorteilhafte zweckmässige Weiterbildungen der erfindungsgemässen Aufgabenlösung sind in den weiteren abhängigen Ansprüche gekennzeichnet.

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Gleiche Elemente sind in den verschiedenen Figuren mit den gleichen Bezugszeichen versehen.

### Kurze Beschreibung der Zeichnung

Es zeigt:
- Fig. 1: eine Schnellschlussklappe im Schnitt,
- Fig. 2: ein Servosystem im Schnitt mit einer Schliessposition des Klappentellers von 30°,
- Fig. 2a: die Situation in der Kupplung bei einer Stellung nach Fig. 2,
- Fig. 3: ein Servosystem im Schnitt, mit einer Schliessposition des Klappentellers von 90°, d.h., bei geschlossener Klappe,
- Fig. 3a: die entsprechende Situation der Kupplung bei dieser Stellung nach Fig. 3,
- Fig. 4: eine hydraulische Bremse,
- Fig. 5: einen Schnitt durch ein Klappengehäuse,
- Fig. 6: einen Querschnitt durch den Hebel des Klappentellers im Bereich des Jochs und
- Fig. 7: ein qualitatives Schema über den Verlauf der verschiedenen Drücke und der Schliessgeschwindigkeit.

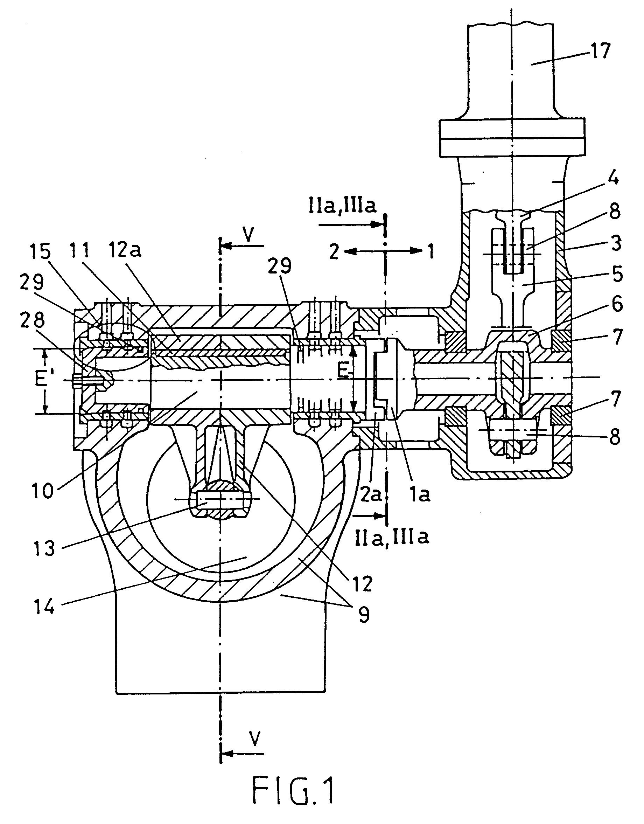

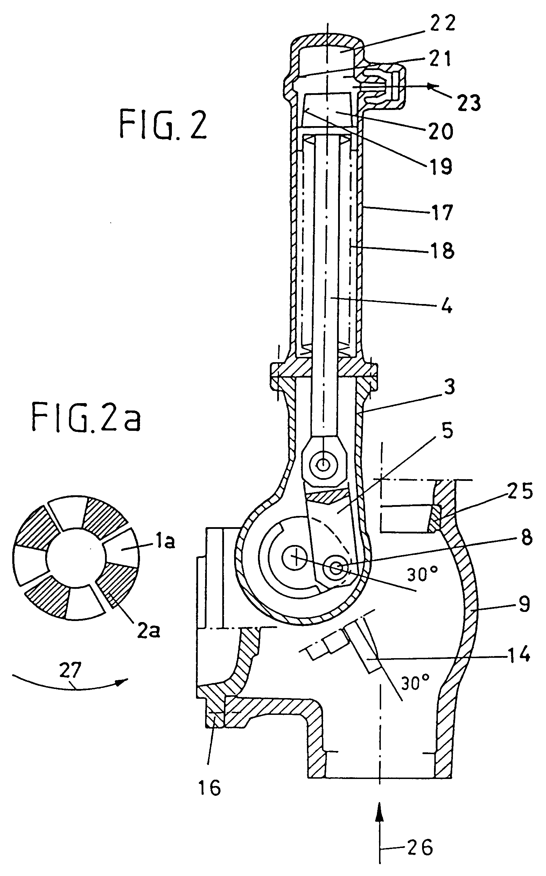

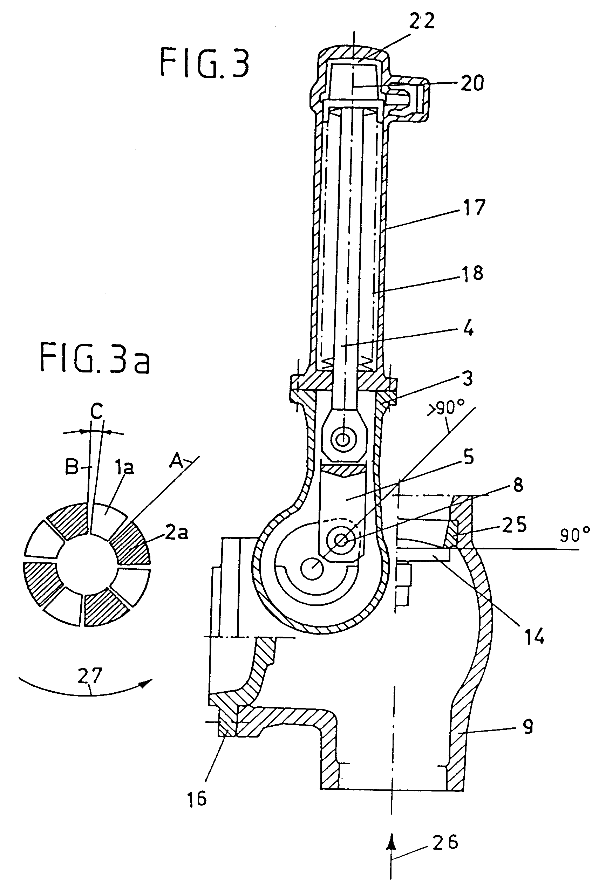

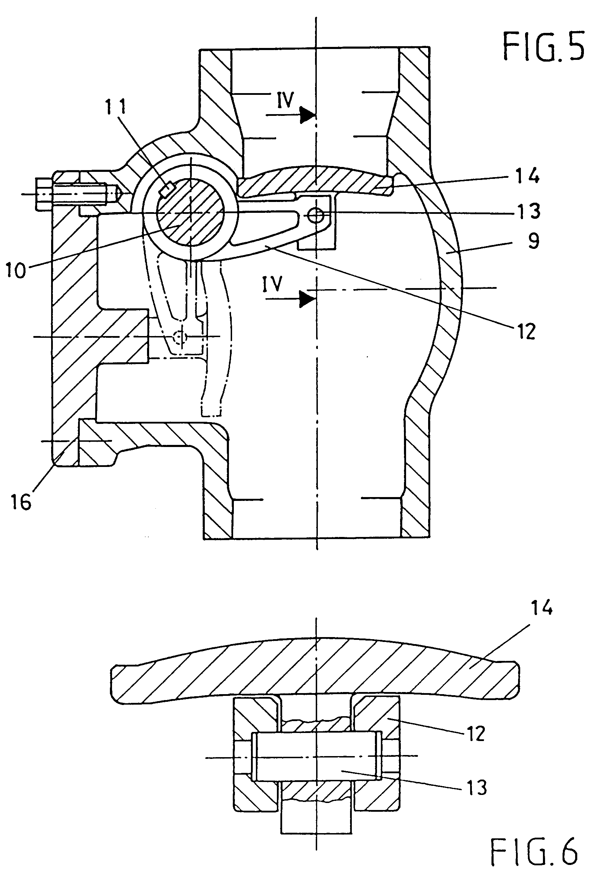

Fig. 1 zeigt einen Schnitt durch eine Schnellschlussklappe, die hier eine Pendelklappe ist, entlang der Kupplungswelle 6 resp. der Klappenwelle 10. Das System ist in ein Servosystem 1 und in ein Klappentellersystem 2 unterteilt. Gekoppelt sind die beiden Systeme 1, 2 durch eine Zahnkupplung 1a, 2a, welche die Masse aller beweglichen Teile in etwa halbieren kann. Das Servosystem 1 selbst besteht, von den Aussenteilen her betrachtet, aus einem Servogehäuse 17, dessen Innenteile in Fig. 2 und 3 angemessen ersichtlich sind, und aus einem Transmissionsgehäuse 3, das abgewinkelt und mit dem Klappengehäuse 9 verbunden ist. Teilweise ist im Transmissionsgehäuse 3 eine Servostange 4 aus dem Servogehäuse 17 ersichtlich, welche über eine Koppel 5 die Verbindung zu Kupplungswelle 6 erstellt. Die Koppel 5 selbst ist exzentrisch an einer Verdickung der Kupplungswelle 6 - im Sinne einer Kolbenstange - fixiert, wobei die beiden Verbindungspunkte gegenüber der Servostange 4 und der Kupplungswelle 6 je durch einen Fixierungsbolzen 8 erstellt werden. Für die konstruktive Ausgestaltung wird hier auf Fig. 2 und 3 verwiesen. Die Kupplungswelle 6 ist im Transmissionsgehäuse 3 zweipunktgelagert 7 und erstreckt sich bis zum Kupplungsteil 1a. Vom Klappentellersystem 2 ist ein Teil des Klappengehäuses 9 ersichtlich, und zwar derjenige Teil, der in der Ebene der Kupplung, die hier eine Klauenkupplung ist, 1a, 2a liegt. Der Klappenteller 14 der hier dargestellten Pendelklappe ist insoweit ersichtlich, als er sich in offener Position befindet. Zum besseren Verständnis der Ausschwenklage und der Kinematik des Klappentellers 14 wird hier empfohlen, Fig. 5, welche den Schnitt V.-V. wiedergibt, heranzuziehen. Die Fortsetzung des Kupplungsteils 2a, klappentellersystemseitig, ist eine Klappenwelle 10, deren Durchmesser nach aussen hin verschiedentlich abgesetzt ist. Symmetrisch zur Schnittebene V.-V. erstreckt sich in Längsrichtung das auf der Klappenwelle 10 gelagerte Auge 12a des Hebels 12, der wiederum den Klappenteller 14 trägt, wobei die Verbindung dieser beiden Elemente, nämlich Hebel 12 und Klappenteller 14, durch ein Joch 13 erstellt ist. Ein Keil 11 durch das Auge 12a und Klappenwelle 10 sorgt dafür, dass die Kraftübertragung vom Servosystem 1 über die Kupplung 1a, 2a zum Hebel 12 und schlussendlich auf den Klappenteller 14 erbracht werden kann. Seitlich des Auges 12a ist der Durchmesser der Klappenwelle 10 nochmals abgesetzt. Auf diesem Durchmesser befindet sich eine Kompensationsbüchse 28, deren Durchmesser E' gleich gross wie der Durchmesser E der Klappenwelle 10 jenseits des Auges 12a ist. Um die Klappenwelle 10 beim Schliessen axial zu entlasten, weist die vorliegende Konstruktion Kolbenringe 29 auf, welche auf dem gleichen Durchmesser E=E' beidseiitg des Auges 12a wirken. Somit bildet die Kompensationsbüchse 28 samt Kolbenringe 29 ein System eines Druckausgleiches 15, der bewirkt, dass die Pendelklappe 12, 12a, 13, 14 sicherer und schneller wird. Mit dieser Vorkehrung wird das bis anhin verwendete Pilotventil überflüssig. Die Schnittebenen IIa, IIIa, die durch die Kupplung 1a, 2a gelegt sind, sind als Fig. 2a und 3a dargestellt und werden dort im Zusammenhang mit Fig. 2 und 3 erläutert.

Fig. 2 zeigt einen Schnitt durch das Servogehäuse 17 resp. Transmissionsgehäuse 3. Darüber hinaus ist das nicht in der gleichen Ebene liegende Klappengehäuse 9 ebenfalls im Schnitt dargestellt, dies um die Ablaufdynamik der Pendelklappe im allgemeinen und des Klappentellers 14 insbesondere zur Erläuterung bringen zu können. Servosystemseitig ist neu gegenüber Fig. 1 nunmehr die ganze Servostange 4 ersichtlich; des weiteren eine lediglich für die Einleitung des Schliessens der Pendelklappe zuständige Feder 18 sowie kopfseitig der Servostange 4 die vorgesehene hydraulische Bremse. Diese besteht aus einem Bremskolben 20 mit einer profilierten Kontur 19, welche im Zusammenhang mit einer im Servogehäuse 17 bereitgestellte Bremskante 21 die Wirkung der hydraulischen Bremse möglich macht. Allgemein lässt sich sagen, dass je kleiner der Bremsquerschnitt gehalten ist, desto grösser die auf die Pendelklappe wirkenden Bremskräfte sind. Es ist offensichtlich, dass diese Bremskräfte den Übertragungsmechanismus in nicht zu unterschätzender Weise belasten. In dieser Figur ist der Klappenteller 14 im ersten Drittel seines Schliessvorganges dargestellt, also in jenem Punkt, wo er vermehrt von der Dampfströmung 26 erfasst wird. Es ist aus der Figur gut verständlich, dass sobald der Klappenteller 14 im Schliessvorgang zu drosseln beginnt, der Dampfdruck jenseits des Sitzringes 25 sinkt, dadurch die Druckdifferenz am Klappenteller 14 selbst steigt. Durch diese steigende Kraft wird der Klappenteller 14 von der Strömung erfasst und gegen den Sitzring 25 beschleunigt, was sich dann als Aufprallkraft niederschlägt. Natürlich könnte die hydraulische Bremse so ausgelegt werden, dass kurz vor dem Aufprall des Klappentellers 14 gegen den Sitzring 25 die Aufprallgeschwindigkeit schlagartig gegen Null abgesenkt würde. Indessen, dies liesse zu grosse Bremskräfte auf die Elemente des Übertragungsmechanismus aufkommen, welche den ungebremsten Aufprallkräften betragsmässig nicht minder nachstehen. Andererseits darf die hydraulische Bremse nicht eine zu niedrige Schliessgeschwindigkeit vorgeben, denn dies würde unweigerlich die Schliesszeit zu stark erhöhen: Die aufgabengemässe Funktion der Schnellschlussklappe, den Dampfstrom zu sperren, wenn das Regelventil bei einem Lastabwurf versagt, könnte mithin nicht erfüllt werden.

Die hier vorgesehene hydraulische Bremse sorgt dafür, dass sich der Klappenteller 14 ab ca. 60° in Schliessrichtung mit einer konstanten Schliessgeschwindigkeit von etwa 5 m/s bewegt. Berechnungen haben ergeben, dass die hier abgebildete Pendelklappe bei einer Aufprallgeschwindigkeit von 5 m/s, die wegen der bereitzustellenden Schliesszeit nicht unterboten werden kann, am Hebel 12 des Klappentellers 14 eine Spannung von ca. 700 N/mm² entstehen lässt. Geht man davon aus, dass darüber hinaus noch Temperaturen von bis zu 565°C vorherrschen können, so lässt sich leicht vorstellen, dass die tragenden Teile der Pendelklappe, insbesondere der Hebel 12, stets auf das Höchste gefährdet sind. Selbst durch den Einsatz von hochlegierten hitzebeständigen Stählen lässt sich das spannungsmässige Problem nicht zufriedenstellend lösen. Die Reduktion der auftretenden Kräfte bzw. Spannungen in den geforderten Querschnitten beim Aufschlag des Klappentellers 14 auf den Sitzring 25 wird hier bewerkstelligt, indem, Servosystem 1 und Klappentellersystem 2 durch die Kupplung 1a, 2a (siehe Fig. 1) an sich verselbständigt werden, dergestalt, dass die Kupplung mit einem Freilauf versehen wird. Dieser Freilauf sorgt dafür, dass die Massen der bewegten Teile des ganzen Systems der Pendelklappe kinematisch getrennt werden, so dass die Beanspruchung beim Aufschlag des Klappentellers 14 auf den Sitzring 25 auf zwei Schläge nacheinander verteilt wird. Nachdem also der auf konstante Schliessgeschwindigkeit gebremste Klappenteller 14 auf den Sitzring 25 aufgeschlagen hat, drehen sich alle Massen ab Kupplung, servosystemseitig, weiter und schlagen um den Betrag des Freilaufes erst später an.

Fig. 2 ist ein Schnitt durch die Ebene IIa in Fig. 1, und Fig. 2a stellt das Kupplungsverhältnis bei der intermediären Lage der Pendelklappe gemäss Fig. 2 dar. Aus der Drehrichtung 27 ist es gut erkennbar, dass die einzelnen zum Klappentellersystem 2 gehörenden Klauen 2a im Verlaufe des Schliessvorganges der Pendelklappe die Klauen 1a des Servosystems 1 antreiben, d.h., während der dampfströmungsbedingten Beschleunigungsphase des Klappentellers 14 übernimmt das Servosystem 1 - durch die oben gewürdigte hydraulische Bremse - die Funktion einer Bremse.

Wie die Verhältnisse in der Klauenkupplung 1a, 2a schlussendlich aussehen, nachdem der Klappenteller 14 auf den Sitzring 25 aufgeschlagen hat, geht aus Fig. 3, insbesondere 3a hervor.

Zunächst ist aus Fig. 3 lediglich ersichtlich, dass der Klappenteller 14 in Schliessposition steht und dass die Servostange 4 ganz eingefahren ist.

Aus Fig. 3a ist ersichtlich, dass die Klauen 2a nun die Ebene des Anschlages A des Klappentellersystems 2 erreicht haben, welche für diesen Kupplungsteil Endstation bedeutet. Bei diesem Zustand ist es klar, dass die Klauen 1a, zum Servosystem 1 gehörend, nun nicht mehr vorwärts getrieben werden können und demnach gegenüber dem angeschlagenen Klappenteller 14 abgekoppelt sind. Diese Verselbständigung heisst zunächst für den Kupplungsteil des Servosystems 1, dass er, um den Freilauf, der hier kupplungsgemäss ein Freiwinkel C ist, weiterdrehen kann, bis seine Klauen 1a die Ebene B erreicht haben, welche durch die vorgängig festaufgefahrenen Klauen 2a des Klappentellersystems 2 vorgegeben ist.

Demnach schlägt der Klappenteller 14 vorerst auf den Sitzring 25 mit einer kinetischen Energie auf, welche durch die Masse der beweglichen Teile des Klappentellersystems 2 bestimmt wird. Der nachfolgende zweite Aufschlag, nach Durchlauf des Freiwinkels C in der Klauenkupplung, bringt die Masse der beweglichen Teile des Servosystems 1 zum Halt, wobei die hydraulische Bremse in diesem Intervall ohne weiteres eine zusätzliche Verzögerung entfalten kann, insbesondere dann angebracht, wenn die aufschlagende Masse des Servosystems 1 grösser als diejenige des Klappentellersystems 2 sein sollte.

Selbstverständlich können auch andere freilauffähige Kupplungen zum Einsatz gelangen. Es ist wichtig, dass der Freilauf jeweils eine echte Trennung und Verselbständigung der beiden Massen nach Aufschlag der ersten ermöglicht. Bei einer Klauenkupplung wird der Freilauf mit einem Freiwinkel C grösser 2° erfüllt.

Unter den Gesichtspunkten der auftretenden Spannungen am Hebel 12 des Klappentellers 14 bringt diese Verselbständigung ungeahnte Vorteile mit sich: So ist der Hebel 12 nunmehr, ohne die Schliessgeschwindigkeit von 5 m/s zu reduzieren, beim Aufschlag des Klappentellers 14 auf den Sitzring 25 mit bloss maximal 400 N/mm² belastet. Damit lässt sich eine optimale Konstruktion mit üblichen Materialien bewerkstelligen.

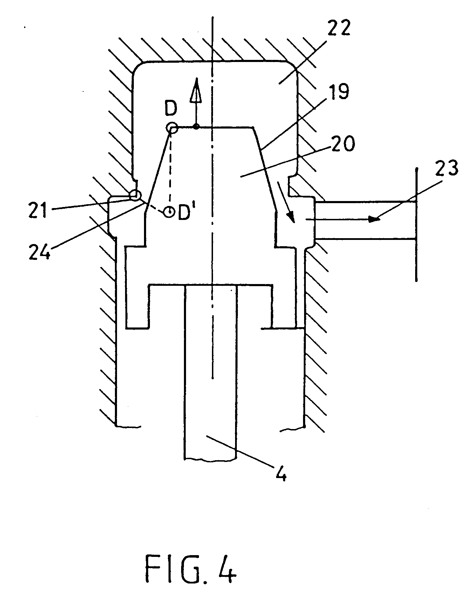

Fig. 4 zeigt näher den Aufbau und die Wirkung der hydraulischen Bremse. Wenn der Klappenteller 14 - durch die Strömung angetrieben - die maximal zulässige Aufprallgeschwindigkeit von z.Bsp. 5 m/s erreicht hat, taucht der Bremskolben 20 mit der Kante D in den Bremsraum ein (Kante 21). Die genau gerechnete Kontur 19 des Bremskolbens 20 hält die Geschwindigkeit des Systems konstant bis zum Aufschlag des Tellers 14 auf den Sitzring 25. Die anschliessende zylindrische Partie ist für den Freilauf bestimmt. Die Drosselung des Ölabflusses 23, welche den Bremsdruck des Servosystems 1 indiziert, ist abhängig von der Grösse des ringförmigen Bremsquerschnitts 24, der aus dem senkrechten Abstand der Bremskante 21 zum Umfang des Bremskolben 20 gebildet ist.

Fig. 5 ist ein Schnitt durch das Klappengehäuse 9 in der Ebene des Klappentellers 14. Darin sind beide Extrempositionen des Klappentellers 14 sowie die Ausbildung des auf konstante Spannung ausgebildeten Hebels 12 ersichtlich. Der Flansch 16 kann beispielsweise ein gehäuseinternes Auge aufweisen, das den Anschlag der Pendelklappe in der Offenstellung bildet. Selbstverständlich kann die Anschlagfläche des Klappentellers 14 in geschlossener Position vom Gehäuse selbst, ohne Zuhilfe eines Ringes erstellt werden.

Fig. 6 zeigt die durch ein Joch 13 gebildete Verbindung zwischen Hebel 12 und Klappenteller 14. Die zwischen Bremsen und Aufschlag schnell ablaufenden Belastungsänderungen verlangen eine zuverlässige Verbindung zwischen Klappenteller 14 und Hebel 12. Ein zweiteiliger Hebel 12 umgeht jegliche Sicherungselemente, denn er fixiert seitlich das Joch 13, das bei Demontage freigegeben wird.

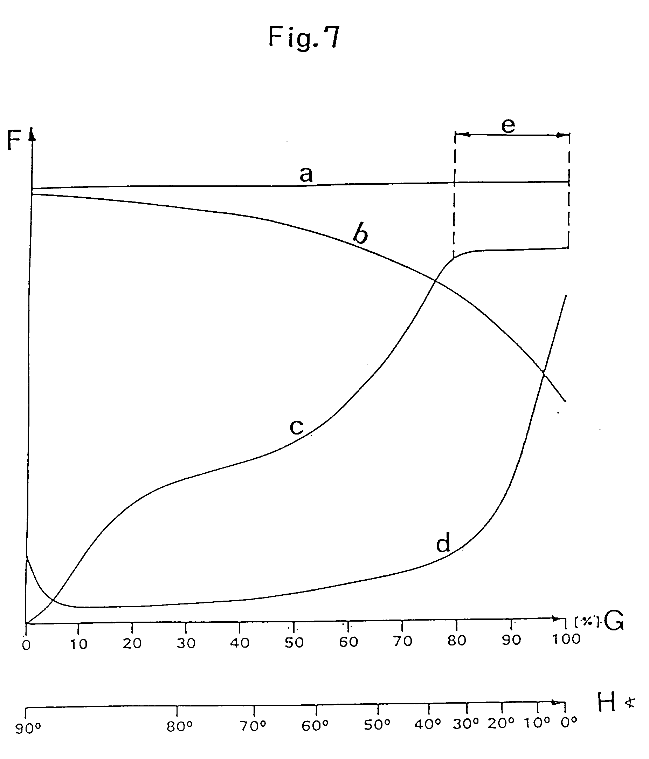

Fig. 7 zeigt ein Schema, worin der qualitative Verlauf der verschiedenen Drücke und der Geschwindigkeit im vorne beschriebenen Schnellschlussklappensystem in Abhängigkeit des Winkels H des Klappentellers 14 und der Zeit in % G dargestellt ist. Die Kurve a stellt den Druck vor dem Klappenteller 14 dar; demgegenüber zeigt die Kurve b den Verlauf des Druckes nach dem Klappenteller 14 auf. Hier ist gut ersichtlich, wie der Druck bei zunehmendem Klappenwinkel H stark absinkt, insbesondere in den letzten 30° des Schliessvorganges. Die Kurve c ist insofern von Interesse, als dort die etwa in den letzten 30° des Schliessvorganges konstant gehaltene Schliessgeschwindigkeit des Klappentellers gut ersichtlich ist. Die flache Strecke e stellt hier den eigentlichen Bremsweg dar. Schlussendlich ist die Kurve d ebenfalls sehr aussagefähig, als dort der Verlauf des Bremsdruckes im Servosystem 1 qualitativ aufgezeigt wird.

## Patentansprüche

1. Schnellschlussklappensystem mit einer Schnellschlussklappe, wobei das Öffnen der einen Klappenteller (14) aufweisenden Schnellschlussklappe durch einen hydraulischen Antrieb und das Schliessen durch eine Feder (18) einleitbar ist, und das Schnellschlussklappensystem aus einem Servosystem (1) und einem Klappentellersystem (2) besteht, wobei die beiden unabhängigen Systeme über eine Kupplung (1a, 2a) miteinander gekoppelt sind, in welcher zwischen dem servosystemseitigem Kupplungsteil (1a) und dem klappentellersystemseitigen Kupplungsteil (2a) ein Freilauf vorhanden ist, welcher bei Verwendung einer Klauenkupplung ein Freiwinkel (C) von grösser 2° ist, und wobei im Servosystem (1) eine hydraulisch arbeitende Bremse eingebaut ist, dadurch gekennzeichnet, dass die hydraulische Bremse aus einem Bremskolben (20) mit einer profilierten Kontur (19), einer Bremskammer (22) und einem Ölabfluss (23) besteht, wobei ein Bremsquerschnitt (24) zum Ölabfluss (23), gebildet aus dem senkrechten Abstand der Bremskante (21) zum Umfang des Bremskolbens (20), in Schliessrichtung der Schnellschlussklappe veränderbar ist.

2. Schnellschlussklappensystem nach Anspruch 1, dadurch gekennzeichnet, dass der Bremsquerschnitt in Schliessrichtung der Schnellschlussklappe abnimmt.

3. Schnellschlussklappensystem nach Anspruch 1, dadurch gekennzeichnet, dass das Klappentellersystem (2) beidseitig zur Lagerung der Schnellschlußklappe (12, 13, 14) durch auf gleichem Durchmesser wirkende Kolbenringe (29) abgedichtet ist.

4. Schnellschlussklappensystem nach Anspruch 3, dadurch gekennzeichnet, dass ein Hebel (12), der den Klappenteller (14) über einem Joch (13) trägt, zweiteilig ausgebildet ist.

## Claims

1. Quick-action flap system having a quick-action flap, opening of the quick-action flap having a flap disk (14) being capable of being initiated by means of hydraulic actuation and closing being capable of being initiated by a spring (18), and the quick-action flap system consisting of a servo system (1) and a flap disk system (2), the two independent systems being coupled to one another via a coupling (1a, 2a), in which a free-wheel is present between the coupling part (1a) on the servo system side and the coupling part (2a) on the flap disk system side which free-wheel with the use of a claw coupling, is a clearance angle (C) of more than 2°, and a brake which operates in hydraulic fashion being mounted in the servo system (1), characterised in that the hydraulic brake consists of a brake piston (20) with a profiled contour (19), a brake chamber (22) and an oil drain (23), a braking cross section (24) with respect to the oil drain, formed by the perpendicular distance of the braking edge (21) from the circumference of the brake piston (20), being variable in closing direction of the quick-action flap.

2. Quick-action flap system according to Claim 1, characterised in that the brake cross section decreases in the closing direction of the quick-action flap.

3. Quick-action flap system according to Claim 1, characterised in that the flap disk system (2) is sealed on both sides for the purpose of mounting the quick-action flap (12, 13, 14) by means of piston rings (29) acting on the same diameter.

4. Quick-action flap system according to Claim 3, characterised in that a lever (12), which bears a flap disk (14) via a yoke (13), is constructed in two parts.

## Revendications

1. Système de clapet à fermeture rapide avec un clapet à fermeture rapide, dans lequel l'ouverture du clapet à fermeture rapide présentant un plateau (14) de clapet peut être déclenchée par une commande hydraulique et la fermeture par un ressort (18), et où le système de clapet à fermeture rapide se compose d'un système asservi (1) et d'un système de plateau de clapet (2), dans lequel les deux systèmes indépendants sont couplés l'un à l'autre par l'intermédiaire d'un accouplement (1a, 2a) dans lequel il est prévu, entre la pièce d'accouplement (1a) du côté du système asservi et la pièce d'accouplement (2a) du côté du système du plateau de clapet, un mécanisme à course libre qui, en cas d'utilisation d'un accouplement à griffes, est un angle libre (C) de l'ordre de 2°, et où un frein à action hydraulique est monté dans le système asservi (1), caractérisé en ce que le frein à action hydraulique se compose d'un piston de frein (20) avec un contour profilé (19), d'une chambre de frein (22) et d'une évacuation d'huile (23), et où une section du frein (24) vers l'évacuation d'huile (23), formée par la distance perpendiculaire entre l'arête de freinage (21) et la périphérie du piston de frein (20), est variable dans le sens de fermeture du clapet à fermeture rapide.

2. Système de clapet à fermeture rapide suivant la revendication 1, caractérisé en ce que la section du frein diminue dans le sens de fermeture du clapet à fermeture rapide.

3. Système de clapet à fermeture rapide suivant la revendication 1, caractérisé en ce que le système de plateau de clapet (2) est rendu étanche de part et d'autre des paliers du clapet à fermeture rapide (12, 13, 14) par des segments de piston (29) agissant sur le même diamètre.

4. Système de clapet à fermeture rapide suivant la revendication 3, caractérisé en ce qu'un levier (12), qui porte le plateau (14) du clapet par l'intermédiaire d'une armature (13), est réalisé en deux parties.
